# EUROPÄISCHE PATENTSCHRIFT

(11) **EP 3 481 999 B1**
(45) Veröffentlichungstag und Bekanntmachung des Hinweises auf die Patenterteilung: **02.12.2020**
(21) Anmeldenummer: 17730375.7
(22) Anmeldetag: 14.06.2017
(51) Int. Cl.: E01B 35/06, B61K 9/08, G06K 9/00, E01B 27/16

(54) **SYSTEM UND VERFAHREN ZUM VERMESSEN EINES GLEISES**
SYSTEM AND METHOD FOR MEASURING A TRACK
SYSTÈME ET PROCÉDÉ DE MESURE D'UNE VOIE

(30) Priorität: 11.07.2016 AT 3252016
(43) Veröffentlichungstag der Anmeldung: 15.05.2019
(73) Patentinhaber: Plasser & Theurer, Export von Bahnbaumaschinen, Gesellschaft m.b.H., 1010 Wien (AT)
(72) Erfinder: WOLLANEK, Samuel, 4320 Pregarten (AT); ZAUNER, Gerald, 4073 Wilhering (AT); BÜRGER, Martin, 4030 Linz (AT)
(86) Internationale Anmeldenummer: PCT/EP2017/000696
(87) Internationale Veröffentlichungsnummer: WO 2018/010827

(56) Entgegenhaltungen:
- EP-A1- 2 960 371
- DE-A1- 2 001 542
- JP-A- S5 356 056
- US-A- 3 381 626

## Beschreibung

### Gebiet der Technik

Die Erfindung betrifft ein System zum Vermessen eines Gleises, welches in Längsrichtung des Gleises zwei äußere Messeinrichtungen und eine dazwischen angeordnete mittlere Messeinrichtung umfasst, wobei jede Messeinrichtung gegenüber dem Gleis eine bestimmte Lage aufweist, um geometrische Gleisparameter zu erfassen. Zudem betrifft die Erfindung ein Verfahren zum Betreiben des Systems.

### Stand der Technik

Eine Gleisvermessung dient der Erfassung von Gleislagefehlern und zur gezielten Durchführung von Korrekturmaßnahmen. Ein dafür vorgesehenes System ermittelt geometrische Gleisparameter wie die Lage des Gleises in horizontaler und vertikaler Richtung sowie die relative Höhenlage der beiden Schienen eines Gleises (Überhöhung, Verwindung) zueinander.

Bei Gleisen mit Schotterbettung sind Richten und Nivellieren die wesentlichen Korrekturmaßnahmen zur Herstellung einer erwünschten Gleislage. Mittels eines Richtsystems wird das Gleis in seiner horizontalen Lage korrigiert. Vertikale Lagefehler des Gleises bzw. der Schienen werden mittels eines Nivelliersystems behoben.

Dafür vorgesehene Gleisbaumaschinen umfassen Arbeitsaggregate, um das Gleis in die erforderliche Position zu bringen und zu unterstopfen. Anschließend kann eine dynamische Gleisstabilisierung mittels eines dafür vorgesehenen Vibrationsaggregats erfolgen, um eine nachhaltige Lage des Gleises im Schotterbett sicherzustellen.

Zum Richten des Gleises wird die sogenannte Pfeilhöhe herangezogen. Als Bezugsbasis dient dabei in der Regel eine Messsehne, die gleismittig zwischen den beiden äußeren Messeinrichtungen des eingangs genannten Systems gespannt ist. Ein Tastorgan der mittleren Messeinrichtung tastet die so gebildete Sehne ab, woraus sich die Pfeilhöhe an dieser Stelle ergibt.

Eine einfache Höhenmessung der beiden Schienen kann über eine Neigungsmessung der jeweiligen Messeinrichtung erfolgen, beispielweise durch Anordnung von Pendeln. Für eine präzise Gleisnivellierung sind solche Lösungen jedoch zu ungenau.

Gewöhnlich ist über jeder Schiene eine weitere Messsehne angeordnet, deren Enden über Gestänge mit den äußeren Messeinrichtungen gekoppelt sind. Damit werden die Höhenlagen der beiden äußeren Messeinrichtungen auf die jeweilige Messsehne übertragen. An der mittleren Messeinrichtung ist für jede Messsehne ein Tastorgan vorgesehen. Dabei besteht wie bei der gleismittigen Messsehne die Schwierigkeit, eine Kollision der Messsehnen mit den Arbeitsaggregaten zu vermeiden.

Aus dem Stand der Technik sind auch Systeme zur Gleisvermessung ohne Messsehnen bekannt. Beispielsweise nutzt eine in der AT 515 208 A4 offenbarte Messeinrichtung einen Maschinenrahmen einer Gleisbaumaschine als Bezugsbasis. Zudem sind seit längerem optische Systeme zur Gleisvermessung bekannt, etwa aus der US 3,107,168 A. Eine aus DE 20 01 542 A1 bekannte Einrichtung zur Überwachung und/oder Korrektur der Lage eines Gleises arbeitet ähnlich, wobei Laserstrahlen emittiert werden.

Aus US 3,381,626 A ist ein System zum Vermessen von Gleisen bekannt, wobei Abschattungsobjekte zwischen linienförmigen Lichtquellen und Sensoren positioniert sind, um Abweichungen von der Solllage zu erkennen.

### Zusammenfassung der Erfindung

Der Erfindung liegt die Aufgabe zugrunde, für ein System und ein Verfahren der eingangs genannten Art eine Verbesserung gegenüber dem Stand der Technik anzugeben.

Erfindungsgemäß wird diese Aufgabe gelöst durch ein System gemäß Anspruch 1 und ein Verfahren gemäß Anspruch 10. Vorteilhafte Weiterbildungen der Erfindung ergeben sich aus den abhängigen Ansprüchen.

Dabei umfasst die eine äußere Messeinrichtung eine Kamera mit einem durch die Kameraparameter Objektivbrennweite und Bildsensorgröße festlegbaren Aufnahmebereich, wobei durch eine gewählte Objektivblende der Kamera die Tiefenschärfe innerhalb des Aufnahmebereichs bestimmbar ist, wobei in dem Aufnahmebereich ein Messobjekt der anderen äußeren Messeinrichtung und ein Messobjekt der mittleren Messeinrichtung angeordnet sind und wobei die Kamera mit einer Auswerteeinrichtung zur Mustererkennung verbunden ist, dass die Auswerteeinrichtung ein Computer ist, in dem eine Mustererkennungs- und Bildauswertungssoftware implementiert sind, um mittels der Mustererkennung die Messobjekte zu erkennen und deren Lage zueinander und bezüglich eines Bildausschnitts der Kamera zu bestimmen.

Mittels Mustererkennung werden die Messobjekte erkannt und deren Lage zueinander und bezüglich eines Bildausschnitts der Kamera bestimmt. Auf diese Weise werden mittels einer einzigen Kamera sämtliche Lageparameter des Gleises erfasst, die für ein präzises Richten und Nivellieren notwendig sind. Insgesamt sind nur wenige Systemkomponenten erforderlich, um die Gleislagemessung durchzuführen. Zudem können Gleisparameter wie Pfeilhöhe, Längshöhe der jeweiligen Schiene, Verwindung und Schienenabstand redundant erfasst werden.

Eine einfache Ausprägung der Erfindung sieht vor, dass das Messobjekt der anderen äußeren Messeinrichtung als eine Lichtquelle ausgebildet ist und dass das Messobjekt der mittleren Messeinrichtung als ein Abschattungsobjekt ausgebildet ist, das einen Teil der Lichtquelle gegenüber der Kamera abschattet. Solche Messobjekte sind einfache und robuste Komponenten, die gegenüber Erschütterungen und Staubentwicklung resistent sind. Das Abschattungsobjekt kann ein einfacher Bauteil der mittleren Messeinrichtung sein, der sich gegenüber der Lichtquelle als charakteristische Silhouette abhebt.

In einer anderen Ausprägung ist es vorteilhaft, wenn beide Messobjekte als Abschattungsobjekte ausgebildet sind, die jeweils einen Teil einer Lichtquelle gegenüber der Kamera abschatten. Dabei weist jedes Messobjekt eine charakteristische Form auf, die verlässlich mittels Mustererkennung erfassbar ist. Die Lichtquelle dient als flächige Hintergrundbeleuchtung.

Eine Weiterbildung der Erfindung sieht vor, dass im Aufnahmebereich der Kamera ein weiteres Messobjekt angeordnet ist. Damit ist eine sogenannte Vierpunktmessung realisiert, mittels der auf einfache Weise Einsenkungen des Gleises feststellbar sind. Mit einer Vielzahl von Messobjekten können zusätzliche Lagedaten des Gleises ermittelt werden. Eines der Messobjekte kann dabei als Lichtquelle ausgebildet sein, die durch die anderen Messobjekte gegenüber der Kamera teilweise abgeschattet wird.

Als sinnvolle Ergänzung weist zumindest ein Messobjekt selbstleuchtende Elemente auf. Diese Maßnahme ermöglicht eine einfachere und raschere Auswertung mittels Mustererkennung unter schwierigen Umgebungsbedingungen. Beispielsweise werden unmittelbar hintereinander zwei Bilder des Messobjekts aufgenommen, wobei die Beleuchtung nur für eine Aufnahme aktiviert wird. Dann ist das Messobjekt in dieser Aufnahme sofort erkennbar.

Des Weiteren ist es vorteilhaft, wenn zumindest ein Messobjekt oder die Kamera an einer Halterung der zugeordneten Messeinrichtung verschiebbar und/oder verschwenkbar ausgebildet ist. Damit ist einerseits sichergestellt, dass beide Messobjekte auch in engen Radien des Gleisverlaufs innerhalb des Aufnahmebereichs der Kamera bleiben. Andererseits ist damit eine Nachführung der Kamera bzw. der Messobjekte möglich, damit die Kamera und die Messobjekte bei Kurvenfahrten auf einer gemeinsamen Achse bleiben.

Für einen einfachen Aufbau des Systems ist es sinnvoll, wenn die Messobjekte und die Kamera jeweils an einem gleisfahrbaren Messwagen angeordnet sind. Der jeweilige Messwagen wird dabei gegen eine Schiene gepresst, wodurch eine eindeutige Lage des Messwagens gegenüber dem Gleis gegeben ist. Somit ist die Lage des Gleises an der jeweiligen Position des Messwagens durch dessen Lage bestimmt.

In einer vorteilhaften Ausprägung ist vorgesehen, dass das System eine Gleisbaumaschine umfasst, an der die Messeinrichtungen angeordnet sind. Dabei ist lediglich darauf zu achten, dass zwischen der Kamera und den Messobjekten Sichtkontakt besteht. Selbst wenn dieser kurzzeitig durch ein Arbeitsaggregat unterbrochen wird, bleibt die Funktionsfähigkeit des Systems bestehen. Anders würde es sich nach dem Stand der Technik bei einer Kollision mit einer Messsehne verhalten.

Günstig ist es, wenn die Gleisbaumaschine als Gleisstopfmaschine ausgebildet ist und wenn ein Messobjekt zur Erfassung einer Gleiskorrektur im Bereich eines Stopfaggregats angeordnet ist. Die Kamera ist an einer äußeren Messeinrichtung und damit entfernt von den Arbeitsaggregaten (Stopfaggregat, Hebe-Richt-Aggregat) der Gleisstopfmaschine angeordnet. Das mittlere Messobjekt im Bereich der Arbeitsaggregate ist als einfaches Abschattungsobjekt ausführbar und somit gegenüber Erschütterungen und Staub unempfindlich. Deshalb kann das mittlere Messobjekt auch direkt beim Stopfaggregat angeordnet sein, wo die durch Unterstopfen fixierte Gleislage gemessen werden soll.

In einer Weiterbildung dieser Systemausprägung ist zumindest einer Messeinrichtung ein Lagemesssystem zugeordnet, mittels dem die Lage gegenüber dem Gleis bestimmbar ist. Die Messeinrichtung ist somit berührungslos gegenüber dem Gleis ausführbar. Die Auswertung der Kameraaufnahmen ergibt die Lage der Messeinrichtungen zueinander und die Auswertung des Lagemesssystems ergibt die Lage der damit ausgestatteten Messeinrichtung bezüglich der Schienen. Durch Koordinatentransformation werden daraus die zu ermittelnden Gleisparameter errechnet.

Beim erfindungsgemäßen Verfahren zum Betreiben eines genannten Systems ist vorgesehen, dass das System entlang des Gleises bewegt wird und dass dabei die Lageänderungen der Messobjekte durch eine Auswertung der mittels Kamera aufgenommenen Aufnahmen der Messobjekte bestimmt werden, indem mittels der im Computer implementierten Mustererkennungs- und Bildauswertungssoftware die Messobjekte erkannt und deren Lagen zueinander und bezüglich eines Bildausschnitts der Kamera bestimmt werden.

Die Auswertung der aufgenommenen Messobjekte erfolgt mittels Mustererkennung, wobei in jeder Aufnahme die Lage der erkannten Messobjekte festgestellt wird. Über die bekannten geometrischen Zusammenhänge zwischen den Messeinrichtungen werden damit die verschiedenen Lageparameter des Gleises errechnet.

Eine vorteilhafte Weiterbildung des Verfahrens ist gegeben, wenn für das System eine charakteristische Vibrationsfrequenz vorgegeben wird und wenn für die Kamera eine Bildrate vorgegeben wird, die zumindest doppelt so hoch ist wie die charakteristische Vibrationsfrequenz. Beim Betrieb einer Gleisbaumaschine treten solche charakteristischen Vibrationsfrequenzen auf, mit daraus resultierenden Systemschwingungen. In einer Bildabfolge mit entsprechend hoher Bildrate können solche Störungen auf einfache Weise rechnerisch eliminiert werden. Konkret werden die Systemschwingungen miterfasst und herausgerechnet.

Vorteilhafterweise ist vorgesehen, dass zumindest ein Messobjekt oder die Kamera bei einer Kurvenfahrt verschoben und/oder verschwenkt wird. Für eine derartige Nachführung wird ein Antrieb der entsprechenden Messeinrichtung abhängig von einem auftretenden Kurvenradius des Gleises angesteuert. Beispielsweise werden die beiden Messobjekte und die Kamera zueinander entlang einer gemeinsamen Achse ausgerichtet, um anhand der dazu erforderlichen seitlichen Verschiebungen die Gleispositionen an den Messstellen zu bestimmen.

Alternativ oder in Ergänzung dazu kann es sinnvoll sein, wenn mittels der Kamera ein an einem Messobjekt angebrachtes Muster, dessen Abbildung sich bei einer Lageänderung des Musters in charakteristischer Weise verändert, aufgenommen wird. In Kurven ist dann keine seitliche Nachführung mehr erforderlich, weil eine Verschiebung des jeweiligen Messobjekts anhand der sich ändernden Aufnahme des Musters festgestellt wird.

Eine vorteilhafte Weiterbildung des Verfahrens sieht vor, dass ein Arbeitsaggregat einer Gleisbaumaschine in Abhängigkeit der erfassten Lage eines Messobjekts angesteuert wird. So wird beispielsweise bei einer Gleisstopfmaschine die Gleislage mittels eines Abschattungsobjekts in unmittelbarer Nähe zum Stopfaggregat ermittelt. Abhängig davon und im laufenden Abgleich mit einer erwünschten Soll-Gleislage erfolgt die Ansteuerung des Hebe-Richt-Aggregats der Gleisstopfmaschine.

Zudem ist es von Vorteil, wenn zumindest die Lage eines Messobjekts oder der Kamera gegenüber dem Gleis berührungslos mittels eines Lagemesssystems erfasst wird. Damit entfallen verschleißanfällige mechanische Komponenten wie Laufräder von Messwagen. Bereits einfache optische Lagemesssysteme wie Laser-Linienscanner sind geeignet, um die Lage der jeweiligen Messeinrichtung gegenüber den Schienen in ausreichender Genauigkeit zu bestimmen.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Gleisbaumaschine in einer Seitenansicht
- Fig. 2: Messeinrichtungen in einer Kurvenfahrt in einer Aufsicht
- Fig. 3: Anordnung mit Messwagen in einer Kurvenfahrt
- Fig. 4: Aufnahme der Messobjekte
- Fig. 5: Aufnahme mit Lageänderungen der Messobjekte
- Fig. 6: Mittlere Messeinrichtung
- Fig. 7: Aufnahme der Messobjekte mit lageabhängigem Muster
- Fig. 8: Aufnahme mit Lageänderung der Messobjekte mit lageabhängigem Muster
- Fig. 9: Mustererkennung eines lageabhängigen Musters
- Fig. 10: Lageabhängiges Muster mit erfasster Lageänderung
- Fig. 11: Aufnahme zweier Abschattungsobjekte vor einer Lichtquelle
- Fig. 12: Aufnahme mit Positionsänderungen der Abschattungsobjekte

### Beschreibung der Ausführungsformen

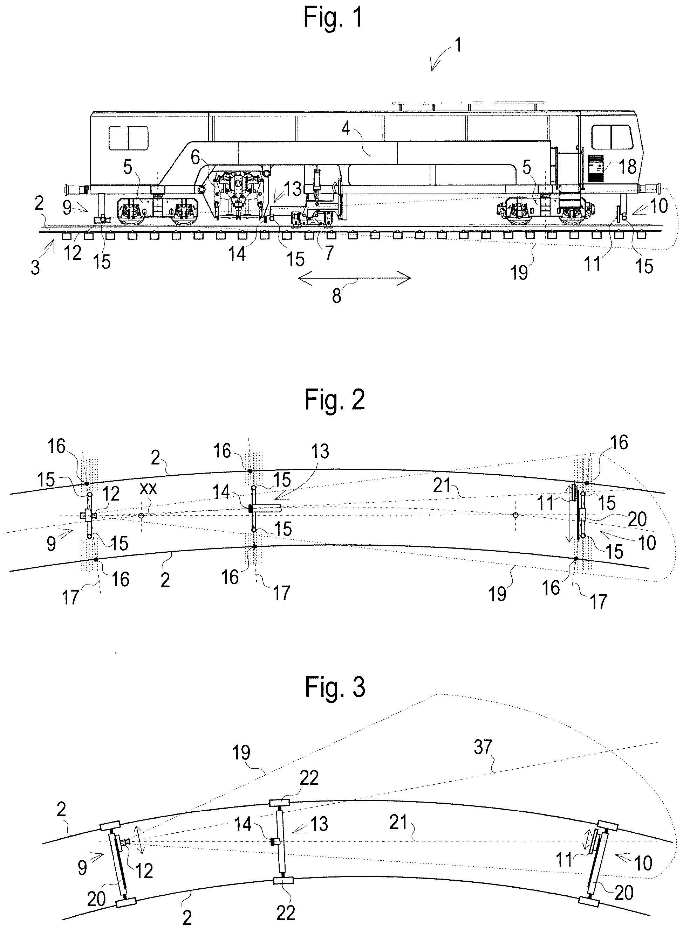

Die Gleisbaumaschine 1 in Fig. 1 ist als Gleisstopfmaschine ausgebildet und auf Schienen 2 eines Gleises 3 verfahrbar. Ein Maschinenrahmen 4 der Gleisbaumaschine 1 ist auf Fahrwerken 5 abgestützt und trägt Stopfaggregate 6 und ein Hebe-Richt-Aggregat 7 als Arbeitsaggregate. Auch andere Gleisbaumaschinen wie Reinigungsmaschinen oder Dynamische Gleisstabilisatoren sind für das erfindungsgemäße System geeignet.

In Längsrichtung 8 des Gleises 3 sind an der Gleisbaumaschine 1 zwei äußere Messeinrichtungen 9 und 10 angeordnet. Die in Arbeitsrichtung gesehen vordere Messeinrichtung 10 umfasst als Messobjekt 11 eine flächige Lichtquelle. Die Leuchtfläche dieser Lichtquelle ist einer Kamera 12 zugewandt, welche an der hinteren Messeinrichtung 9 angebracht ist.

Zwischen den beiden äußeren Messeinrichtungen 9, 10 ist eine mittlere Messeinrichtung 13 angeordnet. An dieser ist ein weiteres Messobjekt 14 in unmittelbarer Nähe zum Stopfaggregat 6 befestigt. Dabei handelt es sich um einen geometrisch charakteristischen Fortsatz, der als Abschattungsobjekt einen Teil der Lichtquelle gegenüber der Kamera 12 abdeckt. Das ist beispielsweise ein Stab oder ein gestanztes Blech. Mittels des weiteren Messobjekts 14 wird die Lage des Gleises 3 an dieser Stelle ermittelt, sodass dort die mit den Stopfaggregaten 6 fixierte Gleislage an eine vorgegebene Soll-Gleislage angeglichen werden kann.

Im ersten Ausführungsbeispiel sind gegenüber dem Gleis 3 berührungslos ausgebildete Messeinrichtungen 9, 10, 13 dargestellt (Fig. 1, 2). Dabei umfasst jede Messeinrichtung 9, 10, 13 ein Lagemesssystem 15, um die Lage der Schienen 2 gegenüber den Messeinrichtungen 9, 10, 13 zu messen. Das jeweilige Lagemesssystem 15 umfasst zum Beispiel für jede Schiene 2 einen Laser-Linienscanner oder einen anderen bekannten optoelektronischen Sensor.

Bezogen auf ein Koordinatensystem der Messeinrichtung 9, 10, 13 werden damit während einer Vorwärtsfahrt der Gleisbaumaschine 1 hintereinander liegende Querschnittsprofile der jeweiligen Schiene 2 erfasst. Daraus ergibt sich ein Lagemodell der jeweiligen Schiene 2, mittels dem die Koordinaten von definierten Messpunkten 16 ermittelt werden. Für jede Messeinrichtung 9, 10, 13 ergeben sich die Messpunkte 16 als Schnittpunkte einer normal zu den Schienen 2 ausgerichteten Bezugsebene 17 mit der theoretischen Fahrkante der jeweiligen Schiene 2 (an der Innenkontur 14mm unterhalb der Schienenoberkante).

Zur Errechnung der Messpunktkoordinaten umfasst das System als Auswerteeinrichtung 18 einen Computer, der beispielsweise in einem Steuerungsraum der Gleisbaumaschine 1 angeordnet und über ein Bussystem mit den Messeinrichtungen 9, 10, 13 verbunden ist. Dabei sind Synchronisationszeitpunkte vorgegeben, die einen zeitlichen Abgleich der Messergebnisse ermögliche.

Für die Berechnung der Messpunktkoordinaten werden neben den Messergebnissen die geometrischen Verhältnisse der Gleisbaumaschine 1 herangezogen. Vereinfacht wird die Auswertung, wenn die Messeinrichtungen 9, 10, 13 immer normal zu den Schienen ausgerichtet sind. Einfacherweise geschieht dies durch Anordnung der äußeren Messeinrichtungen 9, 10 an einem Drehgestellrahmen des jeweiligen Fahrwerks 5.

Die Kamera 12 weist einen Aufnahmebereich 19 auf, der durch Kameraparameter wie Objektivbrennweite und Bildsensorgröße festgelegt ist. Zudem bestimmt eine gewählte Objektivblende die Tiefenschärfe innerhalb des Aufnahmebereichs 19. Ausgerichtet ist die Kamera 12 in Richtung der beiden Messobjekte 11, 14. Diese sind somit im Aufnahmebereich 19 der Kamera 12 angeordnet.

In Fig. 2 sind die drei Messeinrichtungen 9, 10, 13 in einer Kurvenfahrt dargestellt. In diesem Ausführungsbeispiel behalten die hintere und die mittlere Messeinrichtung 9, 13 ihre Position gegenüber dem Maschinenrahmen 4 bei. Die vordere Messeinrichtung 10 ist gegenüber einer Halterung 20 lateral verschiebbar ausgebildet, damit die beiden Messobjekte 11, 14 gegenüber der Kamera 12 auf einer gemeinsamen Achse 21 ausgerichtet bleiben. Dazu ist beispielsweise ein Spindelantrieb vorgesehen, der mittels einer Regelung das äußere Messobjekt 11 während einer Kurvenfahrt nachführt. Alternativ dazu kann auch die Messeinrichtung 10 gegenüber dem Maschinenrahmen 4 verschiebbar sein. Der Verschiebeweg wird zur Koordinatenberechnung der Messpunkte 16 herangezogen.

Das Lagemesssystem 15 kann entfallen, falls die jeweilige Messeinrichtung 9, 10, 13 als Messwagen ausgeführt ist und mittels Räder 22 am Gleis 3 geführt ist (Fig. 3). Dabei müssen die Räder 22 seitlich gegen die Schienen 2 gedrückt sein, damit die jeweilige Messeinrichtung 9, 10, 13 eine eindeutige Lage gegenüber den Schienen 2 aufweist. In diesem Fall ist die Berechnung der Koordinaten einfacher durchführbar, weil die Auswertung der Lagemesssysteme 15 entfällt. Jedoch steigt der Wartungsaufwand aufgrund der bewegten Bauteile.

Für den Einsatz in engen Kurven sind die Kamera 12 und das äußere Messobjekt 11 lateral verschiebbar angeordnet. Mit dieser geregelten Nachführung bleiben die beiden Messobjekte 11, 14 und die Kamera 12 auf einer gemeinsamen Achse 21 ausgerichtet. Dazu sind die Kamera 12 und das äußere Messobjekt 11 jeweils an einer Halterung 20 geführt und mittels eines Stellantriebs verschiebbar. Mit der Gleisbaumaschine 1 sind die Messeinrichtungen 9, 10, 13 in diesem Ausführungsbeispiel über eine jeweilige bewegliche Aufhängung verbunden.

Sinnvoll kann auch ein gezieltes Verschwenken der Kamera 12 sein, um die Messobjekte 11, 14 in einer zentralen Blickachse 37 zu halten. Bei der Berechnung der Koordinaten der Messpunkte 16 wird dann auch der entsprechende horizontale und/oder vertikale Verschwenkwinkel berücksichtigt. Ansonsten reicht es aus, die erfassten Verschiebewege der Kamera 12 bzw. der Messobjekte 11, 14 in die Berechnung mit einzubeziehen.

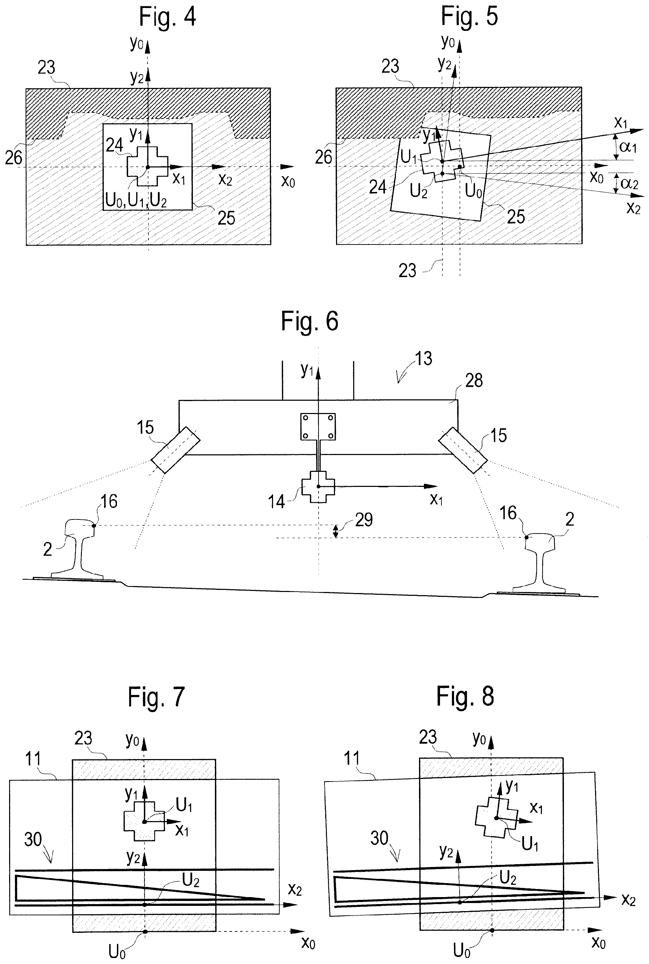

Beispiele für von der Kamera 12 aufgenommene Aufnahmen 23 der Messobjekte 11, 14 sind in den Figuren 4, 5, 7, 8, 11 und 12 dargestellt. Dabei resultieren die Aufnahmen 23 der Figuren 4 und 5 aus einer Systemanordnung gemäß Fig. 2. Ausgewertet werden die Aufnahmen 23 mittels Mustererkennung. Dazu sind seit langem geeignete Kamerasysteme und Softwarelösungen bekannt.

Die Lage der erkannten Messobjekte 11, 14 wird anhand vorgegebener Bezugsysteme bestimmt. In der Regel ist für die Kamera 12 in der Bildsensorebene ein erstes Bezugssystem mit einer x-Koordinatenachse x₀, einer y-Koordinatenachse y₀ und einem Koordinatenursprung U₀ festgelegt. Die Koordinaten alle erkannten Elemente werden auf dieses erste Bezugssystem bezogen.

Für die Lagemesssysteme 15 zur Bestimmung der Positionen der Messobjekte 11, 14 gegenüber dem Gleis 3 sind eigene Bezugssysteme vorgesehen. Konkret ist ein zweites Bezugssystem mit einer x-Koordinatenachse x₁, einer y-Koordinatenachse y₁ und einem Koordinatenursprung U₁ dem als Abschattungsobjekt ausgebildeten mittleren Messobjekt 14 zugeordnet. Ein drittes Bezugssystem mit einer x-Koordinatenachse x₂, einer y-Koordinatenachse y₂ und einem Koordinatenursprung U₂ ist dem als Lichtquelle ausgebildeten äußeren Messobjekt 14 zugeordnet.

Die Messpunkte 16 auf den Schienen 2 werden zunächst mittels des jeweiligen Lagemesssystems 15 im zugeordneten Bezugssystem erfasst und dann auf das erste Bezugssystem transformiert. Dabei ergeben sich über die bekannten geometrischen Verhältnisse auch z-Koordinaten der Messpunkte 16. Zur Synchronisation der Messergebnisse wird ein mittels der Lagemesssysteme 15 gebildetes Schienenmodell herangezogen. Diese Notwendigkeit entfällt, wenn die Messeinrichtungen 9, 10, 13 immer normal zu den Schienen 2 ausgerichtet sind und alle Messpunkte 16 gleichzeitig erfasst werden können.

Jedenfalls ist eine relative oder absolute Zuordnung der Messpunkte 16 zu Geokoordinaten des Gleises 3 sinnvoll. Dabei werden die im ersten Bezugssystem erfassten Messpunktkoordinaten auf ein übergeordnetes Koordinatensystem der Gleisbaumaschine 1 oder des Gleises 3 transformiert. Festgelegt ist dieses übergeordnete Koordinatensystem in bekannter Weise mittels eines Inertialmesssystems, mittels eines GNSS-Systems und/oder mittels neben dem Gleis 3 angebrachter Festpunkte.

Die Aufnahme 23 in Fig. 4 ergibt sich, wenn die Messeinrichtungen 9, 10, 13 auf einem geraden, ebenen Gleis 3 ohne Verwindung angeordnet sind. Dann liegt die durch Abschattung entstehende Silhouette 24 des mittleren Messobjekts 14 zentriert über der Lichtfläche 25, die vom vorderen Messobjekt 11 gebildet wird. Dabei handelt es sich um eine beispielhafte Justierung für eine Ausgangsposition. Die Silhouette 24 und die Lichtfläche 25 sind als geometrische Figuren im Bild mittels Mustererkennung auswertbar. Dazu werden in der Regel Eckpunkte oder Schnittpunkte von Figurenkanten mit festgelegten Auswertelinien erkannt und zueinander in Bezug gesetzt.

Die Erkennbarkeit der Messobjekte 11, 14 wird erleichtert, wenn diese redundante Elemente aufweisen. Das ist bei der mittels eines kreuzförmigen Abschattungsobjekts erzeugten Silhouette 24 mit ihren zwölf geometrisch angeordneten Eckpunkten augenscheinlich. Aber auch die quadratische Lichtfläche 25 bleibt erkennbar, wenn eine Ecke beispielsweise durch Staub oder durch ein Hindernis 26 verdeckt ist (Fig. 5). Ein solches Hindernis 26 kann beispielsweise ein Fahrgestell 5 sein, dass sich in einer Kurve teilweise zwischen Kamera 12 und Messobjekt 11 schiebt.

Eine Kurvenfahrt ergibt eine Aufnahme 23 gemäß Fig. 5. Dabei kommt es gewöhnlich zu einer Verwindung und Verschiebung der Messeinrichtungen 9, 10, 13 zueinander. Bedingt ist die Verwindung durch Überhöhungen oder Rampen im Gleis 3, die mit dem vorliegenden System erfasst werden. Zur Bestimmung der seitlichen Verschiebung wird die Lichtfläche 25 des äußeren Messobjekts 10 lateral nachgeführt, sodass die Mittelpunkte der Lichtfläche 25 und der Silhouette 24 immer auf einer gemeinsamen senkrechten Achse liegen 26. Der Abstand zwischen dieser Achse 26 und der y-Achse y₀ des ersten Bezugssystems gibt dabei die laterale Verschiebung des mittleren Messobjekts 14 an. Die laterale Verschiebung des vorderen Messobjekts 11 ergibt sich zusätzlich aus dem Verschiebeweg dieses Messobjekts 11 gegenüber der Halterung 20.

Zur Bestimmung der Verwindung wird ein Kippen der Lichtfläche 25 bzw. der Silhouette 24 ausgewertet. Zunächst wird ein erster Kippwinkel α₁ erfasst, um den die Silhouette 24 in der Aufnahme 23 gekippt ist. Ein zweiter Kippwinkel α₂ gibt an, um wie viel die Lichtfläche 25 in der Aufnahme 23 gekippt ist. Zudem werden die Messergebnisse der Lagemesssysteme 15 ausgewertet. Mittels der Auswerteeinrichtung 18 werden daraus die Verwindungswerte des Gleises 3 berechnet.

Die Höhenlagen des Gleises 3 und der beiden Schienen 2 werden ebenfalls durch Auswertung der Positionen der Lichtfläche 25 und der Silhouette 24 in den Aufnahmen 23 sowie der Lagemesssysteme 15 erfasst. Konkret ergeben die Verschiebungen der Messobjekte 11, 14 in y-Richtung und die transformierten Koordinaten der Messpunkte 16 die Höhenwerte für die Schienen 2. Wenn die jeweilige Messeinrichtung 9, 10, 13 ein auf den Schienen geführter Messwagen ist, dann werden die Höhenwerte aus den Verschiebewerten und Kippwerten der Messobjekte 11, 14 ermittelt.

In Fig. 6 ist die mittlere Messeinrichtung 13 in einer Vorderansicht dargestellt. Diese Messeinrichtung 13 ist günstigerweise mit dem Hebe-Richt-Aggregat 7 oder mit einem Stopfaggregatrahmen verbunden. Auf diese Weise folgt die Messeinrichtung 13 der lateralen Bewegung während einer Kurvenfahrt oder einer Gleisverlagerung mittels Hebe-Richt-Aggregat 7.

Die Messeinrichtung 13 ist gegenüber den Schienen 2 berührungslos ausgeführt und umfasst deshalb ein Lagemesssystem 15. Dabei ist beispielsweise gegen jede Schiene ein Laser-Linienscanner gerichtet, um die Lagekoordinaten von Messpunkten 16 im Bezugssystem der Messeinrichtung 13 zu erfassen. Günstigerweise ist der Ursprung dieses Bezugssystems der Mittelpunkt des Messobjekts 14, das an einem Querträger 28 der Messeinrichtung 13 montiert ist.

Durch Auswertung der Messergebnisse des Lagemesssystems 15 und der oben beschriebenen Lagebestimmung des Messobjekts 14 gegenüber der Kamera 12 wird die Überhöhung 29 der äußeren Schiene 2 gegenüber der inneren Schiene 2 ermittelt.

Eine Nachführung des äußeren Messobjekts 11 zur Bestimmung der lateralen Verschiebung kann unterbleiben, wenn an dem Messobjekt 11 ein charakteristisches Muster 30 angebracht ist. Entsprechende Aufnahmen 23 sind in den Figuren 7 und 8 dargestellt. Dabei bildet beispielsweise die y-Achse y₀ des ersten Bezugssystems eine Auswertelinie 31, anhand derer die laterale Lage des aufgenommenen Musters 30 bestimmt wird.

Der erfasste Bildausschnitt ist dabei so gewählt, dass immer nur ein Teil des Musters 30 erfasst und ausgewertet wird. Deshalb ist als Messobjekt 11 eine breite Lichtquelle angeordnet, die seitlich über den Bildausschnitt hinausragt. Günstigerweise ist das Muster 30 in einem Bereich der Lichtquelle angeordnet, die nicht vom mittleren Messobjekt 14 abgeschattet wird. Dabei kann es auch sinnvoll sein, mehrere Kameras 12 anzuordnen, um den Aufnahmebereich 19 anzupassen. Das gilt auch für andere Ausführungsvarianten der Erfindung.

Auch das mittlere Messobjekt 14 kann zu Erfassung einer Lageänderung ein charakteristisches Muster 30 aufweisen. Beispielsweise werden in das als Blechteil ausgebildete Messobjekt 14 geometrische Figuren gestanzt, sodass die Lichtquelle des vorderen Messobjekts 11 hindurchscheint. Dabei kann es sich um sogenannte Fiducial Marker handeln, die mittels Mustererkennung und Bildauswertung identifizierbar sind.

Wenn beide Messobjekte 11, 14 ein charakteristisches Muster 30 aufweisen, können ungewollte Schwenkbewegungen der Kamera 12 sofort erkannt werden. Dann bewegen sich die Messobjekte 11, 14 nämlich unter Berücksichtigung des Entfernungsverhältnisses in dieselbe Richtung. Eine derartige Auswertung wird dann nicht als Bewegung der Messobjekte 11, 14, interpretiert, sondern als Schwenkbewegung der Kamera 12.

Andere ungewollte Störungen wie Vibrationen können mit einer entsprechen hohen Bildrate ausgefiltert werden. Dabei muss die Bildrate so hoch sein, dass die durch die Vibrationen auftretenden Bewegungen der in den Bildern erfassten Objekte nachvollziehbar sind. Zudem kann es sinnvoll sein, ein Kamerasystem mit einer integrierten Bildstabilisierung vorzusehen.

In einer anderen Ausführung ist das mittlere Messobjekt 14 mit selbstleuchtenden Elementen ausgeführt. Dabei sind beispielsweise in charakteristischer Weise Leuchtdioden angeordnet, die mittels der Kamera 12 gut erfassbar sind. Verbessert wird damit die Bilderkennung unter schwierigen Umgebungsbedingungen, beispielsweise bei Nacht oder bei starker Staubentwicklung.

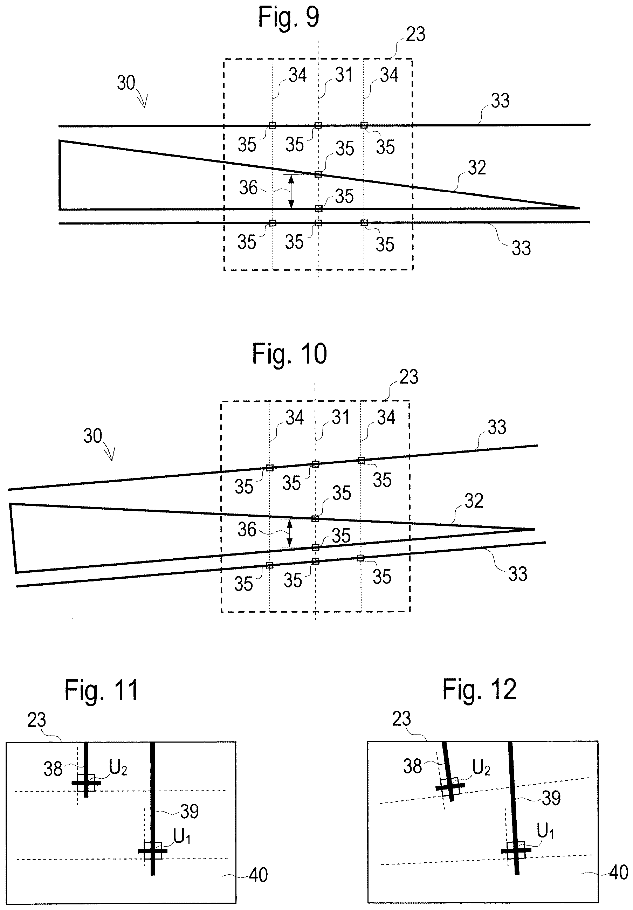

Eine einfache Auswertung ist gegeben, wenn das charakteristische Muster 30 ein Dreieck 32 aufweist (Fig. 9, 10). Eine Seite des Dreiecks 32 ist dabei in einer neutralen Lage des Systems waagrecht ausgerichtet. Ober- und unterhalb des Dreiecks 32 sind zudem waagrechte Linien 33 angeordnet, um ein Kippen des Musters 30 zu erfassen.

Die Erfassung des Musters 30 wird anhand der Figuren 9 und 10 beschrieben. Dabei ist der Rand der von der Kamera 12 erfassten Aufnahme 23 gestrichelt dargestellt. In der Mitte der Aufnahme 23 ist die zentrale Auswertelinie 31 angeordnet. Links und rechts davon sind weitere Auswertelinien 34 vorgesehen. Die Auswertelinien 31, 34 werden zur Mustererkennung genutzt, indem mittels einer entsprechenden Bildauswertungssoftware Schnittpunkte dieser Auswertelinien 31, 34 mit Kanten des Dreiecks 32 und mit Linien 33 gesucht werden. Erkannte Punkte 35 sind in den Figuren 9 und 10 mit kleinen Quadraten gekennzeichnet.

Eine solche Darstellung dient nicht nur der weiteren Bildauswertung, sondern auch zur Justierung des Systems durch ein Bedienpersonal. Dazu ist der Computer mit einer Bedieneinheit und einem Monitor verbunden. Zudem sind in dem Computer neben der Mustererkennungs- und Bildauswertungssoftware noch weitere Programme implementiert. Beispielsweise werden die ermittelten Lagekoordinaten der Messpunkte 16 für eine Maschinensteuerung aufbereitet und in einem Datenspeicher zur Archivierung und Dokumentation abgespeichert.

Anhand der erkannten Punkte 35 wird eine Höhe 36 des Dreiecks 32 ermittelt und als charakteristische Größe für die vorliegende laterale Position des Musters 30 abgespeichert. Ein entsprechendes Auswerteschema ist in der Mustererkennungs- und Bildauswertungssoftware umgesetzt. Auch andere Formen wie Rauten oder Trapeze sind für das Auswerteverfahren geeignet.

Zur Feststellung einer Lageänderung des Musters 30 erfolgt in einer aktualisierten Aufnahme 23 (Fig. 10) erneut eine Mustererkennung und Bildauswertung. Ein Kippen des Musters 30 zeigt sich anhand der entlang der parallelen Linien 30 erkannten Punkte 35. Damit lässt sich auch die erfasste Höhe 36 des Dreiecks 32 auf einen Wert umrechnen, der dem nicht gekippten Dreieck 32 entspricht. Dieser Wert ist repräsentativ für die aktualisierte laterale Position des Musters 30.

Die erläuterten Ausführungen stellen nur einige der von der Erfindung umfassten Varianten dar. Beispielsweise sind in einer weiteren Erfindungsvariante mehr als zwei Messobjekte 11, 14 angeordnet, um weitere Lagedaten zu erfassen. Mit drei Messobjekten ist eine sogenannte Vierpunktmessung durchführbar, wobei die Koordinaten der Messobjekte und der Kamera 12 ausgewertet werden. Beispielsweise sind zwei Abschattungsobjekte und eine positionserfasste Lichtquelle oder drei Abschattungsobjekte angeordnet. Damit sind insbesondere Einsenkungen des Gleises 3 erfassbar.

Die Figuren 11 und 12 zeigen Aufnahmen 23 von zwei als Abschattungsobjekte ausgebildete Messobjekte 11, 14, die sich als Muster 38, 39 gegenüber einer Hintergrundbeleuchtung 40 abheben. Dazu ist von der Kamera 12 aus gesehen hinter den beiden Abschattungsobjekten eine Lichtquelle angeordnet. Diese Lichtquelle muss keine charakteristischen Merkmale zur Mustererkennung aufweisen.

Lediglich die Abschattungsobjekte weisen eine charakteristische Form auf, wobei ein Abschattungsobjekt direkt an einer Leuchtfläche der Lichtquelle angebracht sein kann. Beide Abschattungsobjekte können auch distanziert von der Lichtquelle angeordnet sein, wobei die Distanzen zwischen den Abschattungsobjekten und der Kamera 12 zur Positionsbestimmung herangezogen werden.

In Fig. 11 ist eine neutrale Lage der Abschattungsobjekte dargestellt. Jedes Abschattungsobjekt erzeugt ein kreuzförmiges Muster 38, 39. Die Positionen der Koordinatenursprünge U₁, U₂ und die Ausrichtung der Kreuze werden mittels Mustererkennung erkannt. Bei einer Lageänderung werden die veränderte Positionen der Koordinatenursprünge U₁, U₂ und die veränderte Ausrichtung der Kreuze erkannt und es erfolgt eine Berechnung der neuen Koordinaten der Messobjekte 11, 14.

## Patentansprüche

1. System zum Vermessen eines Gleises (3), welches in Längsrichtung (8) des Gleises (3) zwei äußere Messeinrichtungen (9, 10) und eine dazwischen angeordnete mittlere Messeinrichtung (13) umfasst, wobei jede Messeinrichtung (9, 10, 13) gegenüber dem Gleis (3) eine bestimmte Lage aufweist, um geometrische Gleisparameter zu erfassen, **dadurch gekennzeichnet, dass** die eine äußere Messeinrichtung (9) eine Kamera (12) mit einem durch die Kameraparameter Dbjektivbrennweite und Bildsensorgröße festlegbaren Aufnahmebereich (19) umfasst, wobei durch eine gewählte Objektivblende der Kamera (12) die Tiefenschärfe innerhalb des Aufnahmebereichs (19) bestimmbar ist, dass in dem Aufnahmebereich (19) ein Messobjekt (11) der anderen äußeren Messeinrichtung (10) und ein Messobjekt (14) der mittleren Messeinrichtung (13) angeordnet sind, dass die Kamera (12) mit einer Auswerteeinrichtung (18) zur Mustererkennung verbunden ist, und dass die Auswerteeinrichtung (18) ein Computer ist, in dem eine Mustererkennungs- und Bildauswertungssoftware implementiert sind, um mittels der Mustererkennung die Messobjekte (11, 14) zu erkennen und deren Lage zueinander und bezüglich eines Bildausschnitts der Kamera (12) zu bestimmen.

2. System nach Anspruch 1, **dadurch gekennzeichnet, dass** das Messobjekt (11) der anderen äußeren Messeinrichtung (10) als eine Lichtquelle ausgebildet ist und dass das Messobjekt (14) der mittleren Messeinrichtung (13) als ein Abschattungsobjekt ausgebildet ist, das einen Teil der Lichtquelle gegenüber der Kamera (12) abschattet.

3. System nach Anspruch 1, **dadurch gekennzeichnet, dass** beide Messobjekte (11, 14) als Abschattungsobjekte ausgebildet sind, die jeweils einen Teil einer Lichtquelle gegenüber der Kamera (12) abschatten.

4. System nach einem der Ansprüche 1 bis 3, **dadurch gekennzeichnet, dass** im Aufnahmebereich (19) der Kamera (12) ein weiteres Messobjekt angeordnet ist.

5. System nach einem der Ansprüche 1 bis 4, **dadurch gekennzeichnet, dass** zumindest ein Messobjekt (11, 14) selbstleuchtende Elemente aufweist.

6. System nach einem der Ansprüche 1 bis 5, **dadurch gekennzeichnet, dass** zumindest ein Messobjekt (11, 14) oder die Kamera (12) an einer Halterung (20) der zugeordneten Messeinrichtung (9, 10, 13) verschiebbar und/oder verschwenkbar ausgebildet ist.

7. System nach einem der Ansprüche 1 bis 6, **dadurch gekennzeichnet, dass** die Messobjekte (11, 14) und die Kamera (12) jeweils an einem gleisfahrbaren Messwagen angeordnet sind.

8. System nach einem der Ansprüche 1 bis 7, **dadurch gekennzeichnet, dass** das System eine Gleisbaumaschine (1) umfasst, an der die Messeinrichtungen (9, 10, 13) angeordnet sind.

9. System nach Anspruch 8, **dadurch gekennzeichnet, dass** zumindest einer Messeinrichtung (9, 10, 13) ein Lagemesssystem zugeordnet ist, mittels dem die Lage gegenüber dem Gleis (3) bestimmbar ist.

10. Verfahren zum Betreiben eines Systems nach einem der Ansprüche 1 bis 9, **dadurch gekennzeichnet, dass** das System entlang des Gleises (3) bewegt wird und dass dabei die Lageänderungen der Messobjekte (11, 14) durch eine Auswertung der mittels Kamera (12) aufgenommenen Aufnahmen der Messobjekte (11, 14) bestimmt werden, indem mittels der im Computer implementierten Mustererkennungs- und Bildauswertungssoftware die Messobjekte (11, 14) erkannt und deren Lagen zueinander und bezüglich eines Bildausschnitts der Kamera (12) bestimmt werden.

11. Verfahren nach Anspruch 10, **dadurch gekennzeichnet, dass** für das System eine charakteristische Vibrationsfrequenz vorgegeben wird und dass für die Kamera (12) eine Bildrate vorgegeben wird, die mindestens doppelt so hoch ist wie die charakteristische Vibrationsfrequenz.

12. Verfahren nach Anspruch 10 oder 11, **dadurch gekennzeichnet, dass** zumindest ein Messobjekt (11, 14) oder die Kamera (12) bei einer Kurvenfahrt verschoben und/oder verschwenkt wird.

13. Verfahren nach einem der Ansprüche 10 bis 12, **dadurch gekennzeichnet, dass** mittels der Kamera (12) ein an einem Messobjekt (11, 14) angebrachtes Muster (30), dessen Abbildung sich bei einer Lageänderung des Musters (3) in charakteristischer Weise verändert, aufgenommen wird.

14. Verfahren nach einem der Ansprüche 10 bis 13, **dadurch gekennzeichnet, dass** ein Arbeitsaggregat (6, 7) einer Gleisbaumaschine (1) in Abhängigkeit der erfassten Lage eines Messobjekts (11, 14) angesteuert wird.

15. Verfahren nach einem der Ansprüche 10 bis 14, **dadurch gekennzeichnet, dass** zumindest die Lage eines Messobjekts (11, 14) oder der Kamera (12) gegenüber dem Gleis (3) berührungslos mittels eines Lagemesssystems (15) erfasst wird.

## Claims

1. A system for surveying a track (3), comprising - with regard to the longitudinal direction (8) of the track (3) - two outer measuring devices (9, 10) and a central measuring device (13) arranged there between, wherein each measuring device (9, 10, 13) has a specific position relative to the track (3) in order to detect geometric track parameters, **characterized in that** the one outer measuring device (9) comprises a camera (12) with a recording area (19) which is defined by track parameters such as lens focal length and image sensor size, wherein a selected lens aperture of the camera (12) determines the depth of field within the recording area 19, that a measuring object (11) of the other outer measuring device (10) and a measuring object (14) of the central measuring device (13) are arranged in the recording area (19), and that the camera (12) is connected to an evaluation device (18) for pattern recognition, and that the evaluation device (18) is a computer in which a pattern recognition and image evaluation software are implemented to recognize by means of pattern recognition, the measuring objects (11, 14) and to determine the position thereof relative to one another and with respect to an image section of the camera (12).

2. A system according to claim 1, **characterized in that** the measuring object (11) of the other outer measuring device (10) is designed as a light source, and that the measuring object (14) of the central measuring device (13) is designed as a shadowing object which shadows a part of the light source against the camera (12).

3. A system according to claim 1, **characterized in that** both measuring objects (11, 14) are designed as shadowing objects, each shadowing a part of a light source against the camera (12).

4. A system according to one of claims 1 to 3, **characterized in that** a further measuring object is arranged in the recording area (19) of the camera (12).

5. A system according to one of claims 1 to 4, **characterized in that** at least one measuring object (11, 14) comprises luminescent elements.

6. A system according to one of claims 1 to 5, **characterized in that** at least one measuring object (11, 14) or the camera (12) is designed to be displaceable and/or pivotable in a mount (20) of the associated measuring device (9, 10, 13).

7. A system according to one of claims 1 to 6, **characterized in that** the measuring objects (11, 14) and the camera (12) are each arranged on a measuring trolley mobile on the track.

8. A system according to one of claims 1 to 7, **characterized in that** the system comprises a track maintenance machine (1) on which the measuring devices (9, 10, 13) are arranged.

9. A system according to claim 8, **characterized in that** a position measuring system is associated with at least one measuring device (9, 10, 13), by means of which the position relative to the track (3) can be determined.

10. A method of operating a system according to one of claims 1 to 9, **characterized in that** the system is moved along the track (3) and that, during this, the changes in position of the measuring objects (11, 14) are determined by means of an evaluation of the images of the measuring objects (11, 14) recorded by means of the camera (12) wherein by means of pattern recognition and image evaluation software implemented in the computer, the measuring objects (11, 14) are recognized and the position thereof relative to one another and with respect to an image section of the camera (12) is determined.

11. A method according to claim 10, **characterized in that** a characteristic vibration frequency is specified for the system, and that for the camera (12) a frame rate is specified which is at least double the characteristic vibration frequency.

12. A method according to claim 10 or 11, **characterized in that** at least one measuring object (11, 14) or the camera (12) is displaced and/or swivelled during travel in a curve.

13. A method according to one of claims 10 to 12, **characterized in that** a pattern (30), affixed to a measuring object (11, 14), is recorded by means of the camera (12), wherein the image of said pattern (30) changes in a characteristic way when the position of the pattern changes.

14. A method according to one of claims 10 to 13, **characterized in that** a working unit (6, 7) of a track maintenance machine (1) is controlled in dependence on the detected position of a measuring object (11, 14).

15. A method according to one of claims 10 to 14, **characterized in that** at least the position of one measuring object (11, 14) or the camera (12) with respect to the track (3) is detected in a contact-free manner by means of a position measuring system (15).

## Revendications

1. Système de mesure d'une voie ferrée (3), qui comprend dans la direction longitudinale (8) de la voie ferrée (3) deux dispositifs de mesure extérieurs (9, 10) et un dispositif de mesure central (13) disposé entre eux, dans lequel chaque dispositif de mesure (9, 10, 13) présente une position déterminée par rapport à la voie ferrée (3) pour détecter des paramètres de voie géométriques, **caractérisé en ce qu'**un des dispositifs de mesure extérieurs (9) comprend une caméra (12) avec une région d'enregistrement (19) pouvant être définie par les paramètres de caméra que sont la distance focale d'objectif et la taille de capteur d'image, dans lequel la profondeur de champ au sein de la région d'enregistrement (19) peut être déterminée par un diaphragme d'objectif choisi de la caméra (12), qu'un objet de mesure (11) de l'autre dispositif de mesure extérieur (10) et un objet de mesure (14) du dispositif de mesure central (13) sont disposés dans la région d'enregistrement (19), que la caméra (12) est connectée à un dispositif d'évaluation (18) pour la reconnaissance de modèle, et que le dispositif d'évaluation (18) est un ordinateur dans lequel un logiciel de reconnaissance de modèle et d'évaluation d'image est mis en œuvre pour reconnaître les objets de mesure (11, 14) au moyen de la reconnaissance de modèle et pour déterminer leur position l'un par rapport à l'autre et par rapport à une section d'image de la caméra (12).

2. Système selon la revendication 1, **caractérisé en ce que** l'objet de mesure (11) de l'autre dispositif de mesure extérieur (10) est réalisé en tant que source lumineuse et que l'objet de mesure (14) du dispositif de mesure central (13) est réalisé en tant qu'objet d'ombrage qui ombrage une partie de la source lumineuse par rapport à la caméra (12).

3. Système selon la revendication 1, **caractérisé en ce que** les deux objets de mesure (11, 14) sont réalisés en tant qu'objets d'ombrage qui ombragent chacun une partie d'une source lumineuse par rapport à la caméra (12).

4. Système selon une des revendications 1 à 3, **caractérisé en ce qu'**un autre objet de mesure est disposé dans la région d'enregistrement (19) de la caméra (12).

5. Système selon une des revendications 1 à 4, **caractérisé en ce qu'**au moins un objet de mesure (11, 14) présente des éléments autolumineux.

6. Système selon une des revendications 1 à 5, **caractérisé en ce qu'**au moins un objet de mesure (11, 14) ou la caméra (12) est réalisé(e) de manière coulissante et/ou pivotante sur une fixation (20) du dispositif de mesure associé (9, 10, 13).

7. Système selon une des revendications 1 à 6, **caractérisé en ce que** les objets de mesure (11, 14) et la caméra (12) sont chacun disposés sur un wagon de mesure ferroviaire.

8. Système selon une des revendications 1 à 7, **caractérisé en ce que** le système comprend une machine de pose de voie (1) sur laquelle sont disposés les dispositifs de mesure (9, 10, 13).

9. Système selon la revendication 8, **caractérisé en ce qu'**un système de mesure de position au moyen duquel la position par rapport à la voie ferrée (3) peut être déterminée est associé à au moins un dispositif de mesure (9, 10, 13).

10. Procédé d'exploitation d'un système selon une des revendications 1 à 9, **caractérisé en ce que** le système est déplacé le long de la voie ferrée (3) et que les modifications de position des objets de mesure (11, 14) sont en l'occurrence déterminées par une évaluation des enregistrements des objets de mesure (11, 14) enregistrés au moyen de la caméra (12) **en ce que** les objets de mesure (11, 14) sont reconnus au moyen du logiciel de reconnaissance de modèle et d'évaluation d'image mis en œuvre dans l'ordinateur et leurs positions l'un par rapport à l'autre et par rapport à une section d'image de la caméra (12) sont déterminées.

11. Procédé selon la revendication 10, **caractérisé en ce qu'**une fréquence vibratoire caractéristique est prédéfinie pour le système et qu'une fréquence d'images est prédéfinie pour la caméra (12), laquelle est au moins le double de la fréquence vibratoire caractéristique.

12. Procédé selon la revendication 10 ou 11, **caractérisé en ce qu'**au moins un objet de mesure (11, 14) ou la caméra (12) est coulissé(e) et/ou pivoté(e) lors d'un trajet en virage.

13. Procédé selon une des revendications 10 à 12, **caractérisé en ce qu'**un modèle (30) appliqué sur un objet de mesure (11, 14) dont la représentation varie de manière caractéristique lors d'une modification de position du modèle (3) est enregistré au moyen de la caméra (12).

14. Procédé selon une des revendications 10 à 13, **caractérisé en ce qu'**un module de travail (6, 7) d'une machine de pose de voie (1) est commandé en fonction de la position détectée d'un objet de mesure (11, 14).

15. Procédé selon une des revendications 10 à 14, **caractérisé en ce qu'**au moins la position d'un objet de mesure (11, 14) ou de la caméra (12) par rapport à la voie ferrée (3) est détectée sans contact au moyen d'un système de mesure de position (15).
